## Europäisches Patentamt
## European Patent Office
## Office européen des brevets

(11) Publication number: **0 138 390**
**B1**

(12) **EUROPEAN PATENT SPECIFICATION**

(45) Date of publication of patent specification: **27.01.88**

(51) Int. Cl.⁴: **G 02 B 23/16**

(21) Application number: **84306298.5**

(22) Date of filing: **14.09.84**

(54) Isolation of optical surfaces from contaminating environments.

(30) Priority: **17.10.83 US 542876**

(43) Date of publication of application:
**24.04.85 Bulletin 85/17**

(45) Publication of the grant of the patent:
**27.01.88 Bulletin 88/04**

(84) Designated Contracting States:
**DE FR GB IT**

(56) References cited:
**GB-A-1 039 955**
**GB-A-2 127 174**
**US-A-3 310 356**

(73) Proprietor: **THE BABCOCK & WILCOX COMPANY**
**1010 Common Street P.O. Box 60035**
**New Orleans Louisiana 70160 (US)**

(72) Inventor: **Bohl, Thomas L.**
**306 Hyder Drive**
**Madison Ohio (US)**
Inventor: **Ciammaichella, Richard C.**
**13575 Ravenna Road**
**Newbury Ohio (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to apparatus for and methods of isolating optical surfaces of optical elements from contaminating environments.

A problem associated with instruments using optics that are subjected to dirty gas streams is that of maintaining cleanliness of the optics so that the readings are not biassed by accumulated material that would absorb light. Conventional means of keeping the surfaces clean consist of blowing air across a window or lens thereby displacing any dirt-laden gases and maintaining a clean surface. Unfortunately, a source of clean air in the vicinity of the instrument is frequently difficult to find. Filtering the inlet air helps, but also requires filter maintenance. Even good filters on blower inlets allow small particles to be blown on the optical surfaces and will eventually coat or, worse, etch the surface. Compressed air offers no solution as it contains moisture and oil which will be deposited on the surface and, for other reasons such as a cooling effect on the surface, is undesirable to use.

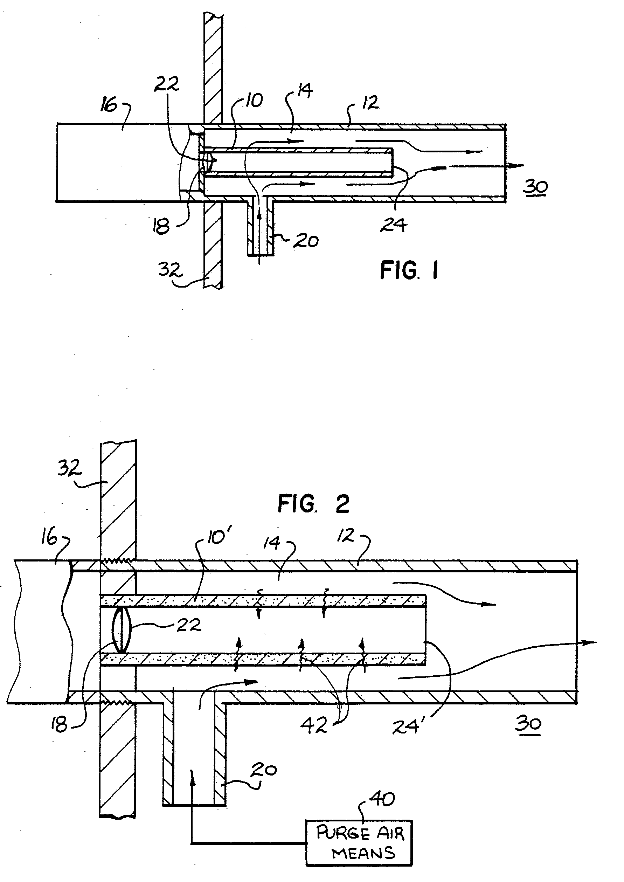

A known, typical solution to the problem will now be described with reference to Figure 1 of the accompanying drawing, which shows an instrument 15 having optics (an optical element) 18 having an optical surface 22. Purge (clean) air is introduced via an inlet 20 into an annular space 14 between concentric solid wall pipes or tubes, 10, 12 which are supported on a wall 32. Purge air entering the instrument at the inlet 20 will not contact the optical surface 22 directly and should form an air curtain at an open end 24 of the tube (isolation tube) 10 to prevent process dirt from a process area 30 from contacting the optics 18 of the instrument 16. In practice, this situation does not occur. The air travelling through the annular space or annulus 14 aspirates the inside of the isolation tube 10, causing it to be at a pressure lower than the pressure in the tube (sighting pipe) 12. This effect causes process gas and entrained dirt to be carried back to the optics 18.

A relevant patent is US Patent No. US—A—3 310 356 (Borberg), which discloses a device for protecting lenses typically used in a television camera employed in an industrial application. This patent acknowledges that a low pressure area is created in front of the lens due to aspiration. It compensates for this condition by introducing air at a pressure higher than the purge air and allowing this higher pressure air to either go through an aperture in a lens or be transmitted through a shield in front of the lens. In this manner, the effects of aspiration can be reduced since the low pressure air will be directed away from the lens by means of the high pressure air. No isolation tube is used however, and air at two different pressures is needed.

US Patent No. US—A—2 856 542 (McPheeters) shows the use of high pressure air to direct dirt-laden air away from lenses in a transmitter and a receiver of a photo-electric system. In effect, the high pressure air forms a wind curtain around the lenses, thus preventing the dirt-laden air from impinging thereon. Here again, an isolation tube is not utilised.

The present invention provides apparatus for isolating an optical surface of an optical element from a contaminating environment, the apparatus comprising an outer tube which may be cylindrical, square or have any other cross-sectional shape, the tube having an open end communicating with the contaminating environment. An inner tube, which likewise has any desirable cross-sectional shape, is disposed within the outer tube and also has an open end. A space is defined around the sides and open end of the inner tube and the outer tube. Purging gas means is connected to the outer tube for supplying a purging gas to this space. The optical element is engaged or otherwise associated with the inner tube so that its optical surface is in the inner space of the inner tube and spaced from the open end of the inner tube. The inner tube is made of porous material so that at least some of the purging air enters the inner space of the inner tube.

The present invention thus utilises an inner (or isolation) tube which is made of a porous material, such as layers of filter screen or sintered metals. These materials are currently used in fabricating gas filters. Layered screen materials in cylindrical shapes are available from Bendix Corporation and sintered metal shapes are available from Mott Metallurgical Corporation.

By using an inner or isolation tube having a porosity in a selected range, preferably 1 to 40 μm, a portion of the purge air can penetrate the tube walls thereby relieving any negative pressure generated by aspirating effects and preventing or at least hindering backflow of process gases. Particles in the purge air are kept from contacting the optic surface by proper selection of the tube wall porosity to prevent passage of the entrained particles.

As stated, controlled porosity in the 1 to 40 μm size is preferred. Porosity is limited by having too much flow restriction at the low end of the porosity range, thereby approaching a solid wall tube and allowing aspiration to occur, and at the high end the tube would allow too many particles to pass through the wall and contact the optic surface. Five micrometer porosity material is believed to be the best size for most applications.

Preferably, the isolation tube should have a length to diameter ratio of approximately 5 to 1, be open at both ends, and be secured or capable of being secured to an instrument body, e.g. by welding, bonding, threading or other suitable means.

A preferred form of apparatus embodying the invention and described hereinbelow is simple in design, rugged in construction and economical to manufacture.

The invention also provides a method of isolating an optical surface from a contaminating environment by providing, in a concentric arrangement of inner and outer tubes defining an annular space, that the inner tube is made of porous material so that at least some of a purging gas supplied to the annular space enters the inner space of the inner tube to satisfy an underpressure therein and prevent the drawing in of contaminants into an open end of the inner tube.

The invention will now be further described, by way of illustrative and non-limiting example, with reference to the accompanying drawing, in which:

Figure 1 is a cross-sectional view of a known or conventional purging apparatus for isolating an optical surface; and

Figure 2 is a view similar to Figure 1, of the same apparatus modified to be in accordance with the present invention.

Figure 2 of the drawing shows an apparatus or system embodying the present invention. The apparatus of Figure 2 is similar in many respects to that of Figure 1 (described above) and will therefore largely now be described only insofar as it differs from apparatus of Figure 1. In Figure 2, reference numerals which are the same as those used in Figure 1 designate the same or similar parts, with prime suffices being added to those reference numerals in Figure 2 which designate elements which are modified with respect to corresponding elements of Figure 1.

In Figure 2, the inner or isolation tube 10', which like the outer tube 12 can be cylindrical or have any other cross-sectional shape (e.g. square), is made of porous material which has a porosity of from 1 to 40 µm, and preferably 5 µm. The optical element 18 is engaged or otherwise associated with the inner tube 10'. A purging air system 40 is connected through the inlet 20 for supplying purging air which enters the annular space 14. The space 14 surrounds the sides and open end 24' of the inner tube 10'. As shown by arrows 42, at least some of the purging air filters into the inner space of the air tube 10' to satisfy an aspirated or reduced pressure that would otherwise form within this space.

The tubes 10', 12 can be connected to the wall 32 or the instrument 16 by threading, as shown, or by any other appropriate means, such as welding, press fitting and the like.

The porous material of the inner tube 10' may be one of more layers of gas filtering screen, sintered metal or other porous layers of material which provide the preferred range of porosities.

A preferred ratio of the length of the tube 10' (from the optical surface 22 of the optical or window element 18 to the open end 24') to the diameter of the tube 10' is approximately 5 to 1.

## Claims

1. Apparatus for isolating an optical surface (22) of an optical element (18) from a contaminating environment (30), the apparatus comprising:

an outer tube (12) having one open end for communication with the contaminating environment (30);

an inner tube (10) having sides and an open end (24'), the inner tube being disposed in the outer tube (12) and defining with the outer tube a purging gas space (14) surrounding the sides and open end of the inner tube;

the optical element (18) being associated with the inner tube (10') so that the optical surface (22) thereof is exposed to an inner space of the inner tube with the optical surface spaced from the open end (24') of the inner tube; and

purging gas means (40) connected to the outer tube (12) and communicating with the purging gas space (14) for supplying a purging gas to the purging gas space;

characterised in that the inner tube (10') is made of material having porosity within a selected range so that at least some of the purging gas supplied by the purging gas means (40) to the purging gas space (24) will filter into the inner space of the inner tube to prevent or hinder aspiration of contaminants from the contaminating environment (30) into the open (24') end of the inner tube (10).

2. Apparatus according to claim 1, wherein the porosity ranges from 1 to 40 µm.

3. Apparatus according to claim 2, wherein the porosity is 5 µm.

4. Apparatus according to claim 1, claim 2 or claim 3, wherein a length to diameter ratio of the inner tube (10'), the length being measured from the optical surface (22) to the open end (24') of the inner tube, is about 5 to 1.

5. Apparatus according to any one of the preceding claims, wherein the porous material comprises filter material and/or sintered metal.

6. Apparatus according to any one of the preceding claims, wherein the outer and inner tubes (12, 10') are cylindrical and concentric with each other.

7. A method of isolating an optical surface (22) from a contaminating environment (30) utilising an outer isolation tube (12) having one end communicating with the contaminating environment (30) with an inner tube (10') disposed in the outer tube (12) and defining an annular space (14) therewith, the inner tube (10') having an open end (24') in the outer tube (12) and an inner space bordered by the optical surface (22), which is spaced from the open end (24') of the inner tube (10'), the method comprising supplying purging gas to the annular space (14) and the method being characterised by making the inner tube (10') of a porous material which is at least partially porous to the purging gas so that at least some of the purging gas supplied to the annular space (14) filters through the inner tube (10') into the inner space thereof to prevent or hinder aspiration of contaminants from the contaminating environment (30) into the open end (24') of the inner tube (10').

8. A method according to claim 7, wherein the porosity of the inner tube is chosen to be from 1 to 40 µm.

9. A method according to claim 8, whrein the porosity of the inner tube is chosen to be 5 µm.

10. A method according to claim 7, claim 8 or claim 9, wherein a length to diameter ratio of the inner tube (10'), the length being mesured from the optical surface (22) to the open end (24') of the inner tube, is selected to be about 5 to 1.

**Patentansprüche**

1. Vorrichtung zur Isolierung einer optischen Oberfläche (22) eines optischen Elementes (18) von einer verunreinigenden Umgebung (30) mit einem Außenrohr (12) mit einem offenen Ende für eine Verbindung mit der verunreinigenden Umgebung (30),

einem Innenrohr (10) mit Seiten und einem offenen Ende (24'), wobei das Innenrohr in dem Außenrohr (12) angeordnet ist und mit dem Außenrohr einen Spülgasraum (14) definiert, der die Seiten und das offene Ende des Innenrohres umgibt,

dem optischen Element (18), das mit dem Innenrohr (10') derart verbunden ist, daß seine optische Oberfläche (22) einem Innenraum des Innenrohres ausgesetzt ist; wobei die optische Oberfläche im Abstand von dem offenen Ende (24') des Innenrohres liegt, und

einer Spülgaseinrichtung (40), die mit dem Außenrohr (12) verbunden ist und in Verbindung mit dem Spülgasraum (14) steht, um dem Spülgasraum ein Spülgas zuzuführen,

dadurch gekennzeichnet, daß das Innenrohr (10') aus einem Material mit Porosität innerhalb eines ausgewählten Bereiches besteht, so daß wenigstens etwas des von der Spülgaseinrichtung (40) dem Spülgasraum (24) zugeführten Spülgases in den Innenraum des Innenrohres filtriert wird, um das Einsaugen von Verunreinigungen aus der verunreinigenden Umgebung (3) in das offene (24') Ende des Innenrohres (10) zu verhindern oder behindern.

2. Vorrichtung nach Anspruch 1, bei der die Porosität im Bereich von 1-40 μm liegt.

3. Vorrichtung nach Anspruch 2, bei der die Porosität 5 μm beträgt.

4. Vorrichtung nach Anspruch 1, Anspruch 2 oder Anspruch 3, bei der ein Verhältnis von Länge zu Durchmesser des Innenrohres (10'), wobei die Länge von der optischen Oberfläche (22) bis zum offenen Ende (24') des Innenrohres gemessen wird, etwa 5 zu 1 beträgt.

5. Vorrichtung nach einem der vorausgehenden Ansprüche, bei der das poröse Material Filtermaterial und/oder gesintertes Metall umfaßt.

6. Vorrichtung nach einem der vorausgehenden Ansprüche, bei der die Außen- und Innenrohre (12, 10') zylindrisch und zueinander konzentrisch sind.

7. Verfahren zur Isolierung einer optischen Oberfläche (22) von einer verunreinigenden Umgebung (30) unter Benutzung eines Außenisolierungsrohres (12), von dem ein Ende in Verbindung mit der verunreinigenden Umgebung (30) steht, wobei ein Innenrohr (10') in dem Außenrohr (12) angeordnet ist und mit diesem einen Ringraum (14) definiert, wobei das Innenrohr (10') ein offenes Ende (24') in dem Außenrohr (12) und einen durch die optische Oberfläche (22) begrenzten Innenraum hat, wobei diese im Abstand von dem offenen Ende (24') des Innenrohres (10') liegt, indem man Spülgas dem Ringraum (14) zuführt, dadurch gekennzeichnet, daß man das Innenrohr (10') aus einem porösen Material herstellt, welches wenigstens teilweise porös für das Spülgas ist, so daß wenigstens etwas des dem Ringraum (14) zugeführten Spülgases durch das Innenrohr (10') in dessen Innenraum filtriert, um ein Einsaugen von Verunreinigungen aus der verunreinigenden Umgebung (30) in das offene Ende (24) des Innenrohres (10') zu verhindern oder behindern.

8. Verfahren nach Anspruch 7, bei dem die Porosität des Innenrohres so ausgewählt wird, daß sie bei 1-40 μm liegt.

9. Verfahren nach Anspruch 8, bei dem die Porosität des Innenrohres so ausgewählt wird, daß sie 5 μm beträgt.

10. Verfahren nach Anspruch 7, Anspruch 8 oder Anspruch 9, bei dem ein Verhältnis von Länge zu Durchmesser des Innenrohres (10'), wobei die Länge von der optischen Oberfläche (22) bis zum offenen Ende (24') des Innenrohres gemessen wird, so ausgewählt wird, daß es etwa 5 zu 1 beträgt.

**Revendications**

1. Appareillage pour isoler une surface optique (22) d'un élément optique (18) d'un milieu ambiant contaminant (30), appareillage comprenant:

un tube extérieur (12) ayant une extrémité ouverte pour communication avec le milieu ambiant contaminant (30);

un tube intérieur (10) ayant des côés et une extrémité ouverte (24'), le tube intérieur étant disposé dans le tube extérieur (12) et définissant avec le tube extérieur un espace de gaz de purge (14) qui entoure les côtés et l'extrémité ouverte du tube intérieur;

l'élément optique (18) étant associé au tube intérieur (10') de façon que sa surface optique (22) soit exposée à un espace intérieur du tube intérieur, la surface optique se trouvant à une certaine distance de l'extrémité ouverte (24') du tube intérieur; et

un moyen de gaz de purge (40) connecté au tube extérieur (12) et communiquant avec l'espace de gaz de purge (14) pour fournir un gaz de purge à l'espace de gaz de purge;

caractérisé en ce que le tube intérieur (10') est réalisé en un matériau ayant une porosité comprise dans un intervalle présélectionné, de façon qu'au moins une partie du gaz de purge fourni par le moyen de gaz de purge (40) à l'espace de gaz de purge (24) s'infiltre dans l'espace intérieur du tube intérieur pour prévenir ou empêcher que des contaminants ne soient aspirés du milieu ambiant contaminant (30) dans l'extrémité ouverte (24') du tube intérieur (10).

2. Appareillage selon la revendication 1, dans lequel la porosité est comprise entre 1 et 40 μm.

3. Appareillage selon la revendication 2, dans lequel la porosité est de 5 μm.

4. Appareillage selon la revendication 1, la revendication 2 ou la revendication 3, dans lequel le rapport entre la longueur et le diamètre du tube intérieur (10′), la longueur étant meaurée de la surface optique (22) à l'extrémité ouverte (24′) du tube intérieur, est d'environ 5:1.

5. Appareillage selon l'une quelconque des revendications précédentes, dans lequel le matériau poreux est constitué d'un matériau filtrant et/ou d'un métal fritté.

6. Appareillage selon l'une quelconque des revendications précédentes, dans lequel les tubes extérieur et intérieur (12, 10′) sont cylindriques, et concentriques l'un à l'autre.

7. Procédé pour isoler une surface optique (22) d'un milieu ambiant contaminant (30), utilisant un tube isolant extérieur (12) ayant une extrémité qui communique avec le milieu ambiant contaminant (30), avec un tube intérieur (10′) disposé dans le tube extérieur (12) et définissant un espace annulaire (14) avec ce dernier, le tube intérieur 10′ ayant une extrémité ouverte (24′) dans le tube extérieur (12) et un espace intérieur limité par la surface optique (22), qui se trouve à une certaine distance de l'extrémité ouverte (24′) du tube intérieur (10′), procédé consistant à envoyer un gaz de purge dans l'espage annulaire (14), procédé caractérisé en ce qu'on réalise le tube intérieur (10′) en un matériau poreux, qui présente une porosité au moins partielle vis-à-vis du gaz de purge, de façon qu'au moins une partie du gaz de purge envoyé dans l'espace annulaire (14) s'infiltre à travers le tube intérieur (10′) et pénètre dans son espace intérieur, pour prévenir ou empêcher que des contaminants ne soient aspirés du milieu ambiant contaminant (30) dans l'extrémité ouverte (24′) du tube intérieur (10′).

8. Procédé selon la revendication 7, dans lequel la porosité du tube intérieur est choisie à une valeur comprise entre 1 et 40 µm.

9. Procédé selon la revendication 8, dans lequel la porosité du tube intérieur est choisie à une valeur de 5 µm.

10. Procédé selon la revendication 7, la revendication 8 ou la revendication 9, dans lequel le rapport entre la longueur et le diamètre du tube intérieur (10′), la longueur étant mesurée de la surface optique (22) à l'extrémité ouverte (24′) du tube intérieur, est choisie de façon à être d'environ 5:1.

FIG. 1

FIG. 2

PURGE AIR MEANS